# EUROPÄISCHE PATENTANMELDUNG

(11) **EP 1 457 105 A1**
(43) Veröffentlichungstag der Anmeldung: **15.09.2004**
(21) Anmeldenummer: 04405101.9
(22) Anmeldetag: 23.02.2004
(51) Int. Cl.: A01G 9/00, A01G 31/00

(54) **Pflanzenträger für abgedichtete Flachdächer**

(30) Priorität: 27.02.2003 CH 3002003; 11.06.2003 CH 10212003; 29.08.2003 CH 14792003; 20.10.2003 CH 17822003
(71) Anmelder: Oekag Wassertechnik (Schweiz) AG, 6005 Luzern (CH)
(72) Erfinder: Morandini, Giorgio, 6005 Luzern (CH); Morandini, Katja, 6005 Luzern (CH)
(74) Vertreter: Gachnang, Hans Rudolf

(57) **Zusammenfassung**

Der Pflanzenträger (9) für folienbeschichtete Flachdächer liegt auf einem Auftriebskörper (7), der sich über den gesamten Pflanzenträger (9) erstreckt und diesen unabhängig vom Wasserspiegel auf dem Flachdach stets in einem Abstand zur Wasseroberfläche (h₁) trägt. Der Auftriebskörper kann plattenförmig und mit vertikalen Bohrungen durchsetzt sein oder aus einem granulatartigen Material bestehen. Das angestaute Wasser kann als Brauchwasser genutzt werden.

## Beschreibung

Gegenstand der Erfindung ist ein Pflanzenträger für abgedichtete Flachdächer gemäss Oberbegriff des Patentanspruchs 1.

Flachdächer müssen heute in der Regel aus ästhetischen und ökologischen Gründen begrünt werden. Eine Substrat- oder Kiesauflage schützt die darunter liegende wasserdichte Dachhaut, z.B. Folie, vor mechanischer Beschädigung z.B. durch Hagelschlag oder unsachgemässes Begehen oder Fallenlassen von spitzen Gegenständen. Die Begrünung schützt die Dachhaut zudem vor übermässigen physikalischen Einwirkungen wie UV-Bestrahlung oder starke Erhitzung im Sommer. Bekannt ist auch die längere Lebensdauer begrünter Flachdächer, weil die Dichtung weniger durch Mikroorganismen belastet wird. Eine Dachbegrünung verbessert zudem in Städten das Klima.
Pflanzenträger für die Begrünung von Flachdächern wie Kiesklebedächer oder Klimadächer sind in vielen Ausführungen bekannt. Sie umfassen meist ein Trägerelement, z.B. ein Netz aus verrottbaren Fasern, ein Vlies oder Kunststoffgewebe in das Pflanzensamen oder Jungpflanzen eingebracht worden sind. Nach dem Verlegen der Netze und teilweiser Abstreuung mit Humus spriessen die Pflanzensamen und die Wurzeln der Pflanzen wachsen in den Pflanzenträger. Durch den Bewuchs und die Wurzelverankerung im Netz wird sichergestellt, dass die Pflanzen nicht weggespült oder durch Sturmwinde weggeblasen werden können. Solche Pflanzenträger können in vorteilhafter Weise vorkultiviert werden.
Die Oberflächenberünung kann auf diese Weise innert kurzer Zeit erfolgen. Eine An- oder Wiederbesiedelung mit extensivem Pflanzenbewuchs ist in solchen Netzen auf Retentionsdächern, also Dächern mit einem Wasserrückhalt oder Wasseranstau, bisher nicht erfolgreich gewesen, denn durch den Wasseranstau, welcher bei Retentionsdächern über viele Stunden dauern kann, ertrinken Trockenheit liebende Pflanzen und gehen zugrunde. Wasseranstau in Pflanzensubstraten führt zur Versauerung des Substrats und damit zur Schädigung der Vegetation. Sumpfpflanzen andererseits verdorren in Trockenperioden.

Aus der DE-C2 19654031 ist eine schwimmende textile Pflanzeninsel aus einer ein- oder mehrflächigen Textilstruktur aus schwimmfähigen Faserstoffen bekannt. Diese dient zur Renaturierung von Wasserflächen sowie zum Schutz von Uferzonen. Die flossartig ausgebildete Pflanzeninsel kann auf Wasserflächen angeordnet und gegebenenfalls auch im Standort gewechselt werden. Der aus dieser Schrift bekannte textile Pflanzenträger ist besonders für grössere Repositionspflanzen geeignet, nicht aber für solche für extensiv begrünte Oberflächen mit kleinwüchsigen Abdeckpflanzenarten wie Sedum oder Trockengräsern und Kräutern. Eine Verlegung dieser bekannten Pflanzenträger auf Flachdächern ist ungeeignet, da sie wohl bei einem Regenereignis aufschwimmen kann, jedoch in regenfreien Zeiten auf der Dachfolie aufliegt und austrocknet, weil die Sumpfpflanzen eine grosse Verdunstung aufweisen. Zudem ist der bekannte Pflanzenträger nicht sturmsicher, weshalb der Hersteller die Auflage von Betonsteinen zur Sicherung der Matte empfiehlt. Diese verhindern aber im Gegenzug das Aufschwimmen, wenn das Dach Retentionswasser aufzunehmen hat.
Zu Kontrollzwecken sind Flachdächer periodisch zu prüfen. Ein Begehen solcher aufschwimmender Matten ist nicht zweckmässig und es müssen Gehwege entlang der Matten erstellt werden. Dadurch vermindert sich die begrünte Dachfläche ganz wesentlich.
Die Retention von Wasser in Pflanzenträgersubstraten der bekannten Art ist äusserst bescheiden, sie beträgt maximal 30-40 % des Substratvolumen, d.h. bei 10cm Schichtdicke 20-40 Liter pro m2. Nach der Porensättigung erfolgt die Überflutung und das Wasser fliesst unbegrenzt und verzögerungslos in den Ablauf und in die Kanalisation, weshalb es zu Überschwemmungen kommen kann. 10cm Substrat wiegen zudem ungesättigt 100-130 kg/m2.

Aufgabe der Erfindung ist die Schaffung eines leichtgewichtigen Pflanzenträgers für Flachdächer, der den mechanischen und allgemeinen Schutz der aus einer Kunststofffolie bestehenden Dachhaut und gleichzeitig die Retention von Wasser über längere Zeit ermöglicht, ohne dass die der Begrünung dienenden Pflanzen dabei zugrunde gehen können.

Gelöst wird diese Aufgabe durch einen Pflanzenträger gemäss den Merkmalen des Patentanspruchs 1. Vorteilhafte Ausgestaltungen der Erfindung sind in den abhängigen Ansprüchen definiert.

Durch den Verzicht einer Rundkiesüberdeckung und des üblichen Pflanzensubstrats herkömmlicher Flachdächer können 100 kg/m2 Dachlast eingespart werden. Mit der substratfreien Dacheindeckung wird es möglich, einen raschen Auf- und Abbau nach dem Lebenszyklus zu erlangen. Denn es muss nur eine geringe Menge Baumaterial zur Baustelle geführt und später entsorgt werden. Im Schadensfall kann der Pflanzenträger gelöst und aufgerollt werden. Die Dichtungsmembran der Flachdachkonstruktion kann nach dem Entfernen der die Pflanzen tragenden Auftriebsschicht so rasch visuell zugänglich gemacht und kontrolliert werden. Ein mit dem erfindungsgemässen Pflanzenträger eingedecktes Flachdach benötigt keine Wasserdrainage-Vorrichtungen oder Gefällskonstruktionen und somit weniger Dachabläufe, da ein hoher Retentionsstau möglich wird. Zudem können die Dachabläufe an geeigneter Stelle angeordnet werden, weil das Wasser sich über die gesamte Dachoberfläche verteilen und ungehindert unter den Pflanzenträger zu den Abläufen fliessen kann. Der selbst nicht notwendigerweise schwimmbare Pflanzenträger ist aus einem unverrottbaren Strukturvlies, z.B. feinen Wirrgelege oder Textilgewirke oder dreidimensionaler Filamentmatte gefertigt. Die darunter angeordneten Auftriebskörper tragen den Pflanzenträger stets gleichmässig über der Oberfläche des angestauten Wassers. Solange nur Porenwasser vorhanden ist, kann der Pflanzenträger betreten werden ohne Schaden zu nehmen, weil er nicht aufschwimmt. Die Oberfläche des schwimmenden Pflanzenträgers ist derart feinmaschig ausgestaltet, dass selbst kleine Samen oder Sprossenteile ausgepflanzt werden können. Eine Matten-Vorkultur ist möglich. Dadurch ist eine flächendeckende erosionssichere Extensivbegrünung möglich. Unter dem Pflanzenträger auf der Dachdichtungsfolie kann ein permanenter stehender Wasserstau von 10-30mm vorgesehen werden. Dieser Wasservorrat dient zur Überbrückung der Vegetations-Trockenzeiten. Die Pflanzen können den auf dem Wasser aufschwimmenden Pflanzenträger durchwurzeln und zum Wasser gelangen. Unabhängig von der aufgestauten Wassermenge verbleiben die Pflanzen stets oberhalb dem Wasserspiegel. Das aufgestaute Wasser kann als Brauchwasser genutzt werden.
Die mit dem erfindungsgemässen Pflanzenträger möglich gewordene lange Ablaufzeit, beispielsweise 48 Stunden oder mehr, ermöglicht es, dass sehr kleine Sickerflächen grosse Wassermengen von Flachdächern aufnehmen können oder dass diese langsam abgegebene Wassermenge einer Mischkanalisation zugeleitet werden kann. Überschwemmungen oder hydraulische Netzüberlastungen werden dadurch verhindert.
Es ist weiter möglich, eine extensive Dachbegrünung mit trockenresistenten Pflanzen wie Trockengräsern oder sedumartigen Pflanzen aufzubauen. Diese Pflanzen benötigen sehr wenig Wasser, sie sind aber sehr empfindlich auf lang andauernde Nässe. Der erfindungsgemässe Pflanzenträger ermöglicht den Aufwuchs einer intensiven Vegetation dieser Pflanzengesellschaften, weil einerseits stets ein Wasservorrat vorhanden ist andererseits eine Überflutung ausgeschlossen ist. Durch eine geeignete Auswahl der Auftriebskörper kann die Wasserzufuhr zum Pflanzenträger eingestellt werden. Das Gewicht des als Auftriebskörper dienenden Schüttguts und das Gewicht des Pflanzenträgers genügen, um auf eine windsichere Befestigung der Foliendichtung verzichten zu können.

Anhand illustrierter Ausführungsbeispiele wird die Erfindung näher erläutert. Es zeigen
- Figur 1: einen Teilquerschnitt durch einen Dachbereich mit Randabschluss an eine Betonbrüstung,
- Figur 2: ein Detail einer Befestigung des Pflanzenträgers in Figur 1,
- Figur 3: eine Aufsicht auf ein Flachdach,
- Figur 4: einen Vertikalschnitt durch einen begrünten Pflanzenträger mit einem wasserführenden Auftriebskörper,
- Figur 5: einen Vertikalschnitt durch einen weiteren begrünten Pflanzenträger,
- Figur 6: einen vergrösserten Vertikalschnitt durch einen begrünten Pflanzenträger gemäss Figur 5.

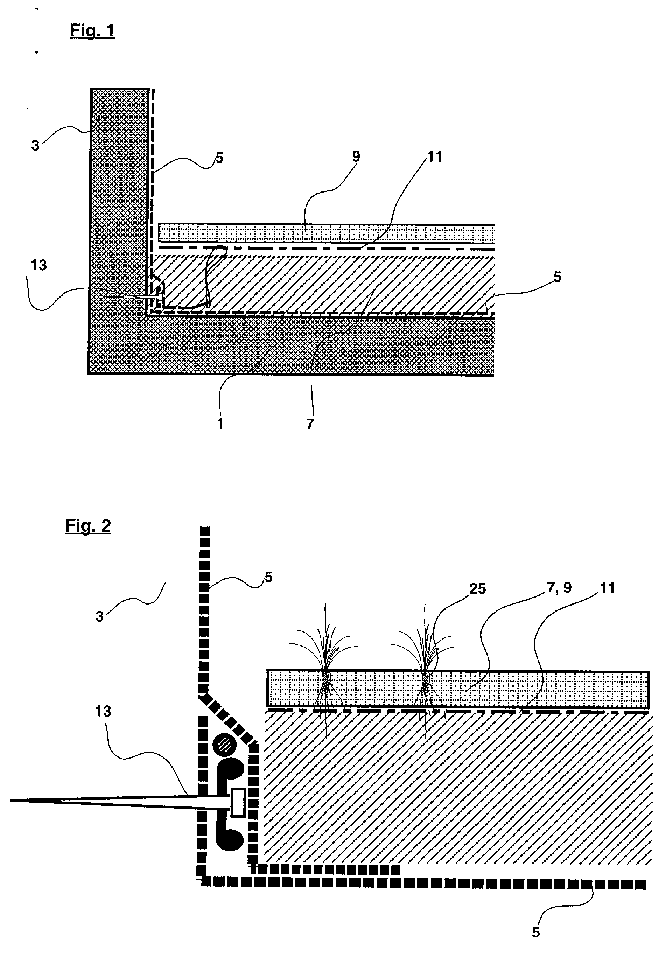

Im schematisch dargestellten Randbereich eines Flachdachs ist mit Bezugszeichen 1 eine Dachplatte dargestellt, an die eine Brüstungswand 3 anschliesst. Die Dachplattenkonstruktion ist frei wählbar, z.B. Tragprofile oder Beton. Auf der Dachoberfläche und der Wandinnenseite ist eine Folie 5 aus Kunststoff, synthetischem Gummi oder Dachpappe aufgelegt. Die Folie 5 dient als Wassersperre zum Gebäude, d.h. zur Dachplatte 1 und zur Wand 3. Auf der Folie 5 liegt, in Figur 1 schematisch als Block 7 dargestellt, ein Auftriebskörper, der nachfolgend näher erläutert wird. über dem Auftriebskörper 7 ist ein Pflanzenträger 9 aus einem Wirrvlies oder Wirrgelege aus synthetischen Fasern oder dergleichen aufgelegt. Zwischen dem Auftriebskörper 7 und dem Pflanzenträger 9 oder über dem Pflanzenträger 9 kann ein Gitter oder Netz 11 angeordnet sein, welches durch ein geeignetes Mittel 13 mindestens entlang der Brüstungswände 3 verankert ist und ein Abheben des Pflanzenträgers 9 und Auftriebskörpers 7 bei Starkwind verhindert.

Figur 2 zeigt eine Verankerungsvorrichtung mit dem Verankerungsmittel 13 in vergrösserter Darstellung.

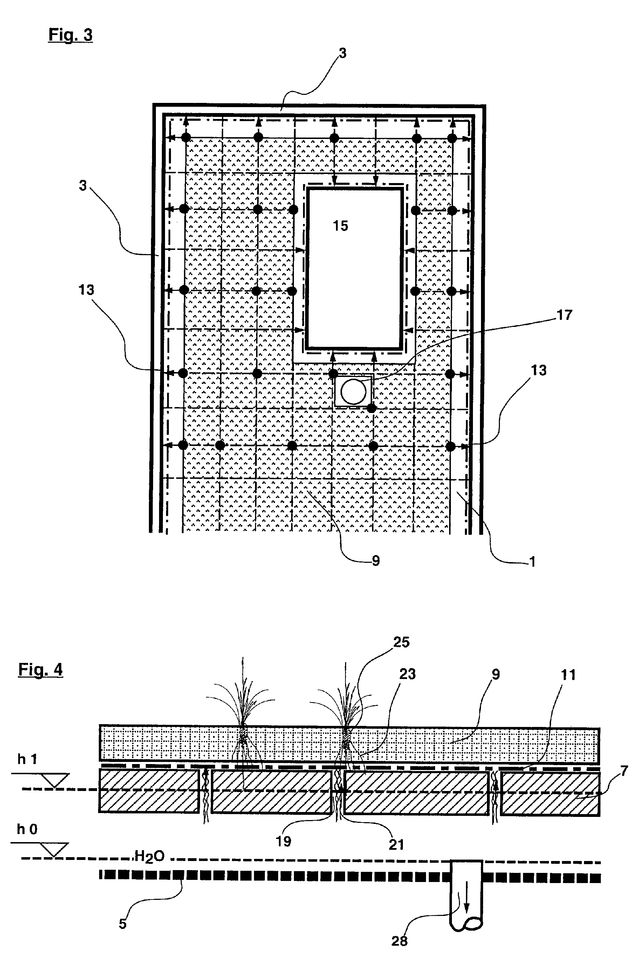

In Figur 3, welche eine Aufsicht auf ein Flachdach darstellt, sind die Brüstungswand 3 und der auf der Dachfläche aufliegende Pflanzenträger 9 sowie das Gitter 11 mit den Verankerungen 13 sichtbar. Verankerungen 13 können auch entlang eines Attika- oder Liftaufbaus 15 vorgesehen sein, ebenso im Bereich eines Kamins 17, welches den Pflanzenträger 9 durchbricht. Eine Perforation der Folie durch Befestigungstifte, die in der Dachplatte verankert sind, entfällt.

In der Ausgestaltung der Erfindung gemäss Figur 4 umfasst der Auftriebskörper 7 eine Platte, deren spezifische Dichte kleiner ist als 1.0 und mit vertikalen Bohrungen 19, die sich von der Unterseite zur Oberseite erstrecken durchdrungen wird. Durch die Bohrungen 19 kann, insbesondere wenn darin ein Docht 21 oder ein anderes wasserförderndes Mittel eingesetzt ist, Wasser, das auf der Folie 5 liegt, zum Pflanzenträger 9 gefördert werden. Die Wurzeln 23 der Pflanzen 25 werden dadurch mit Wasser versorgt, ohne direkt im Wasser zu liegen. Das Niveau h₁ des auf dem Dach 5 gestauten Wassers liegt, je nach Dicke des Pflanzenträgers 9 und der spezifischen Dichte des Auftriebskörpers 7, etwa in der Mitte des Auftriebskörpers 7. Durch eine geeignete Anordnung des Dachablaufs 28, dessen Einlaufhöhe h₀ über der Folie 5 liegt, kann verhindert werden, dass eine Austrocknung des Pflanzenträgers erfolgt, wenn über längere Zeit kein Niederschlag fällt. Mit einer geeignet ausgebildeten Drosselung des Wasserablaufs kann bei einem grossen Regenereignis eine entsprechend grosse Menge an Retentionswasser auf dem Dach zurückgehalten und danach über Stunden oder Wochen dosiert abgeführt werden. Unabhängig davon, ob unterhalb des Auftriebskörpers 7 viel oder wenig Wasser liegt, wird den auf dem Pflanzenträger 9 wachsenden Pflanzen 25 stets nur soviel Wasser zugeführt, wie diese benötigen.

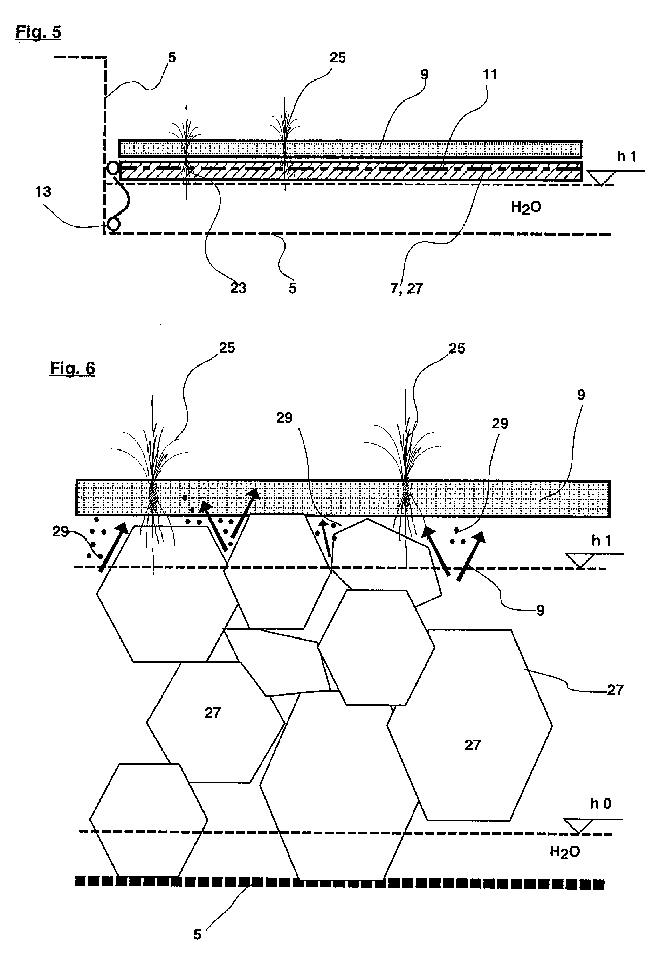

In der Ausgestaltung der Erfindung nach Figur 5 besteht der Auftriebskörper 7 nicht mehr aus einem grossflächigen Element, sondern aus einer Vielzahl von granulat-, hohlkörper- oder kugelförmigen kleinen oder grösseren Auftriebselementen 27, welche als Schüttgut auf die Folie 5 aufgebracht werden, bevor darüber der Pflanzenträger 9 gelegt wird. Die granulat- oder kugelförmigen Auftriebskörper 27 können Hohlkörper sein oder geschlossenporige Schäume aus organischen oder anorganischen Materialien. Diese wirken einerseits als Auftrieb und Tragkörper für den Pflanzenträger 9 und andererseits wird durch deren Poren und über deren Oberfläche Feuchtigkeit nach oben in den Pflanzenträger 9 transportiert. Diese Art von leichten Auftriebskörpern hat den Vorteil, dass er als Schüttgut auf das Flachdach aufgebracht und im Falle einer Flachdachsanierung mit einfachen Mitteln, z.B. durch Absaugen, wieder entfernt werden kann. Im weiteren müssen keine Konfektionsarbeiten vorgenommen werden, da sich Schüttgut, das auf einer Wasseroberfläche schwimmt, von selbst gleichmässig verteilt. Schüttgut kann gewaschen und wiederverwendet werden. Im weiteren kann das Schüttgut, wenn es nicht mehr aufschwimmt, da der Wasserstand so weit abgesunken ist, dass das Schüttgut zur Auflage auf der Folie 5 kommt, ohne weiteres betreten werden. Es sind folglich keine Gehwege und dergleichen notwendig.

Figur 6 zeigt einen vergrösserten Ausschnitt der Darstellung in Figur 5, aus dem der Aufbau des Auftriebskörpers 7 mit den granulatartigen Einzelauftriebskörpern 27 ersichtlich ist. Weiter ist der minimale Wasserstand h₀ und der maximale Wasserstand h₁ ersichtlich. Insbesondere ist beim maximalen Wasserstand ersichtlich, dass ein Teil des Auftriebskörpers oberhalb der Wasseroberfläche h₁ angeordnet ist, so dass in diesem Bereich, über dem der Pflanzenträger 9 liegt, kein Wasser vorhanden ist, sondern nur hohe Luftfeuchtigkeit (angedeutet durch den Pfeil 29). Die Feuchtigkeit 29 pflanzt sich weiter bzw. steigt auf in den Pflanzenträger 9. Je nach Oberflächenbeschaffenheit des Granulats 27 wird mehr oder weniger Wasser nach oben gefördert, entsprechend dem Verbrauch der darauf wachsenden Pflanzen 25.

## Patentansprüche

1. Pflanzenträger (9) für foliebeschichtete Flachdächer, umfassend ein den Pflanzenwurzeln Halt bietendes einoder mehrflächiges textiles Gebilde aus Fasern, **dadurch gekennzeichnet, dass** der Pflanzenträger (9) auf einem wasserdurchlässigen Auftriebskörper (7) aufliegt, der sich gleichmässig unter dem gesamten Pflanzenträger (9) erstreckt und die Unterseite des Pflanzenträgers (9) in einem Abstand über der Wasseroberfläche trägt.

2. Pflanzenträger nach Anspruch 1, **dadurch gekennzeichnet, dass** der Auftriebskörper (7) aus einer mit dessen Unterseite mit der Oberseite verbindenden Bohrungen oder Kanälen (19) durchbrochenen Platte aus einem Material mit einer spezifischen Dichte < 1.0 besteht.

3. Pflanzenträger nach Anspruch 2, **dadurch gekennzeichnet, dass** in den Kanälen (19) Dochte zum Transport von Wasser eingesetzt sind.

4. Pflanzenträger nach Anspruch 1, **dadurch gekennzeichnet, dass** der Auftriebskörper (7) aus einer Vielzahl als Schüttgut vorliegender granulat- oder hohlkörperförmiger Elemente (27) besteht.

5. Pflanzenträger nach Anspruch 4, **dadurch gekennzeichnet, dass** die einzelnen Auftriebselemente (27) gleiche oder unterschiedliche Grösse aufweisen.

6. Pflanzenträger nach einem der Ansprüche 4 oder 5, **dadurch gekennzeichnet, dass** die Auftriebselemente (27) eine spezifische Dichte < 1.0 aufweisen.

7. Pflanzenträger nach einem der Ansprüche 1 bis 6, **dadurch gekennzeichnet, dass** unterhalb, im oder oberhalb des Pflanzenträgers (9) ein Gitter oder Netz (11) aus unverrottbarem Material angeordnet ist.

8. Pflanzenträger nach Anspruch 7, **dadurch gekennzeichnet, dass** das Gitter oder Netz (11) entlang der Ränder des Pflanzenträgers (9) am Flachdach verankert ist und/oder dass die Verankerung der Dachabdichtung wegen der Gewichte des Pflanzenträgers, des Auftriebskörpers und des aufgestauten Wassers entfällt.

9. Pflanzenträger nach einem der Ansprüche 1 bis 7, **dadurch gekennzeichnet, dass** die Foliendichtung (5) gefällslos verlegt werden kann.

10. Pflanzenträger nach einem der Ansprüche 1 bis 8, **dadurch gekennzeichnet, dass** die Wasseranstauhöhe h₀h₁ frei wählbar ist und das Dach ein Brauchwasser-Reservoir darstellt.
